# EUROPEAN PATENT SPECIFICATION

(11) **EP 2 216 573 B1**
(45) Date of publication and mention of the grant of the patent: **21.10.2015**
(21) Application number: 10152458.5
(22) Date of filing: 02.02.2010
(51) Int. Cl.: F16K 15/03

(54) **Non-return valve for a liquid conduit**
Rückschlagklappe für eine Flüssigkeitsleitung
Clapet de retenue pour une conduite de liquide

(30) Priority: 10.02.2009 NL 2002516
(43) Date of publication of application: 11.08.2010
(73) Proprietor: B.B.A. Participaties B.V., 7382 AJ Klarenbeek (NL)
(72) Inventor: Bruin, Johannes, 7325 WV, Apeldoorn (NL)
(74) Representative: Dokter, Hendrik Daniel

(56) References cited:
- US-A- 3 613 720
- US-A1- 2009 000 666

## Description

The invention relates to a non-return valve for a liquid conduit, comprising a closing element and a housing provided with an inlet part and an outlet part which can each be coupled to a corresponding part of the liquid conduit, the housing being assembled from at least two connectable parts between which the closing element is received, which parts can be coupled by means of two co-acting flanges, a first flange of which has a smaller internal cross-section than a second flange, which closing element comprises a sheet of a flexible material received between the first and the second flange; which sheet comprises a central part and a peripheral part connected thereto by a relatively narrow strip, wherein the peripheral part is clamped between the first and the second flange and a peripheral zone of the central part can support on the first flange.

The invention relates more particularly to a non-return valve intended to be received in a water conduit laid for temporary use, for instance during building operations.

Such a non-return valve is known. The known non-return valve has a closing plate which is covered with rubber and which is suspended in a brass housing using a brass yoke suspended in a brass seat. The known non-return valve has the drawback that it is susceptible to rapid wear of the suspension of the closing plate, and moreover has a mass such that in accordance with current labour legislation it cannot be lifted by one person.

US 3 613 720 A1 discloses a non-return valve which is assembled from at least two connectable parts between which the closing element is received, which parts are provided with co-operating flanges which extend perpendicular to the flow direction of a liquid flowing through the valve. The closing element is comprised of a circular gasket portion and a centrally disposed flapper valve portion formed integrally with each other. The flapper valve portion comprises a cylindrical portion with a tapered face, and is provided with a core member in the form of a cylindrical disk, which core member is molded into the body of the closing element.

It is an object of the invention to provide a non-return valve which is little subject to wear, is of simple construction and which has a mass such that, in compliance with current requirements, it can be lifted and displaced in simple manner by one person.

These objects are achieved, and other advantages gained, with a non-return valve of the type according to claim 1.

A housing assembled from connectable parts provides the advantage of accommodating a closing element that is of simper and lighter construction and less subject to wear than a closing element in a prior art non-return valve.

In the case of the permitted flow direction of the liquid through this non-return valve the central part of the sheet is pressed away from the first flange by the liquid flow, while in the case of a liquid flow in counterflow direction the liquid conversely presses the central sheet onto the first flange, wherein the non-return valve is thus closed.

Such a non-return valve, accommodated in a horizontal liquid conduit in a manner such that the second flange with the larger inner diameter extends obliquely above the first flange with the smaller inner diameter, provides the advantage that, in the absence of a liquid flow in the permitted flow direction, the central part of the sheet thereof is pressed by gravitational force onto the first flange, as a consequence of which the non-return valve is in closed position.

The central part in such a non-return valve is preferably provided with a weighting element.

A weighting element enhances the closing, and keeping closed, of the closing element in the case of a liquid flow in counterflow direction.

A practical, ergonomically advantageous embodiment of the non-return valve according to the invention is provided with a handgrip.

In another embodiment the non-return valve is provided with a foot.

A non-return valve according to the invention is preferably stackable so that a plurality thereof can be stored or transported in the most compact manner possible.

In a practically advantageous embodiment of a non-return valve according to the invention at least the inlet part or outlet part is provided with a rapid-action coupling and a pair of clamps with at least one operating member for coupling this inlet part or this outlet part to the conduit part corresponding thereto, wherein the at least one operating member extends at least partially along the housing.

In another embodiment of the non-return valve at least the inlet part or the outlet part is provided with a flange for coupling this inlet part or this outlet part to the conduit part corresponding thereto.

The invention will be elucidated hereinbelow on the basis of an exemplary embodiment with reference to the drawings.

In the drawings
Fig. 1 shows a perspective view of an embodiment of a non-return valve according to the invention, and
Fig. 2 is a top view of a closing element for the non-return valve shown in fig. 1.

Corresponding parts are designated in the figures with the same reference numerals.

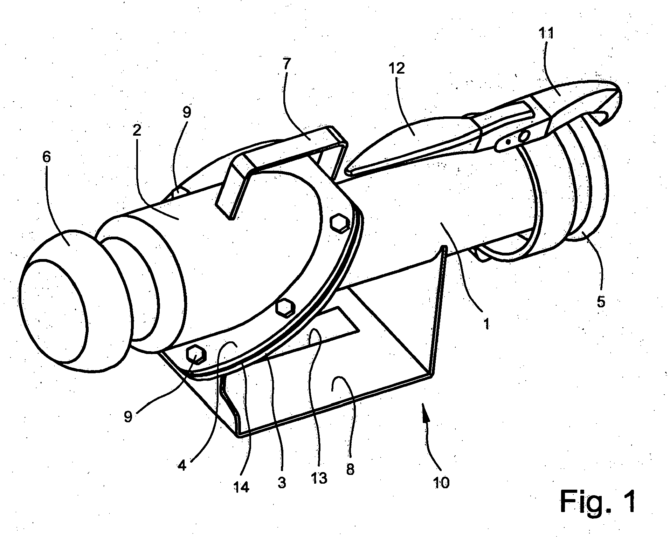

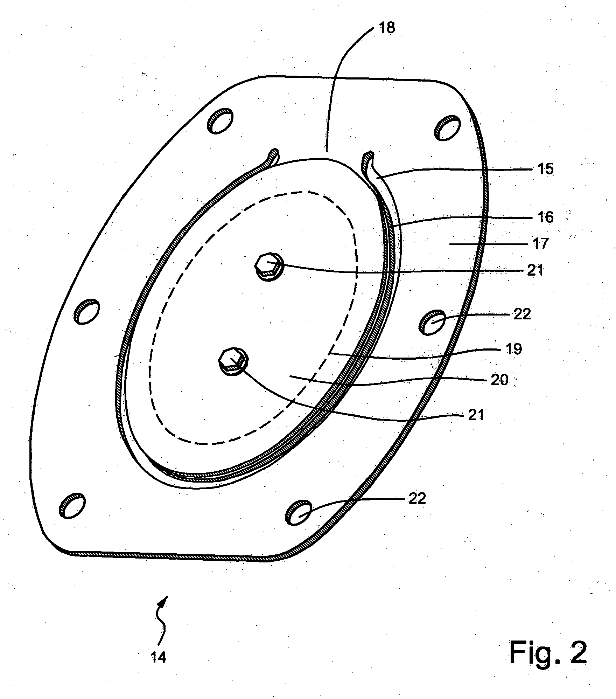

Fig. 1 shows a non-return valve 10 comprising a housing 1, 2 with an inlet part 1 and an outlet part 2 which can each be coupled to a corresponding part of a liquid conduit, wherein inlet part 1 and outlet part 2 form two constituent parts which are coupled by means of co-acting flanges 3, 4 using bolts 9. A closing element 14 (shown in fig. 2) is received between flanges 3, 4. Inlet part 1 and outlet part 2 are provided respectively with a female 5 and a male rapid-action coupling 6 for coupling to corresponding rapid-action couplings of the liquid conduit, for which purpose inlet part 1 is provided with a pair of hinged clamps 11 with an operating lever 12. Outlet part 1 is provided with a handgrip 7, inlet part 2 is provided with a foot 8 with which the closing element in rest position when placed on a horizontal surface rests on the inner periphery of lower flange 3, this inner periphery being smaller than the inner periphery of upper flange 4. Formed in the bottom of foot 8 is a slot 13 in which the handgrip 7 of a following non-return valve 10 can be received, for instance for the purpose of compact transport or compact storage. The non-return valve 10 shown has a weight of about 17 kg.

Fig. 2 shows a rubber sheet 14, the periphery of which corresponds to that of flanges 3, 4 of non-return valve 1 shown in fig. 1. The sheet is subdivided by an incision 15 into a central part 16 and a peripheral part 17, which are connected to each other by a relatively narrow strip 18. Peripheral part 17 of sheet 14 can be clamped between lower flange 3 and upper flange 4, wherein in the rest position a peripheral zone of central part 16 just supports on lower flange 3, the inner periphery of which is indicated with broken line 19. Central part 16 of rubber sheet 14 is provided with a stainless steel weighting plate 20 attached using bolts 21. The figure also shows receiving holes 22 for coupling bolts 9 for flanges 3, 4.

## Claims

1. Non-return valve (10) for a liquid conduit, comprising a closing element (14) and a.housing (1, 2) provided with an inlet part (1) and an outlet part (2) which can each be coupled to a corresponding part of the liquid conduit, the housing being assembled from at least two connectable parts (1, 2) between which the closing element (14) is received, which parts (1, 2) can be coupled by means of two co-acting flanges (3, 4), a first flange (3) of which has a smaller internal cross-section than a second flange (4), which closing element (14) comprises a sheet (14) of a flexible material received between the first (3) and the second flange (4), which sheet (14) comprises a central part (16) and a peripheral part (17) connected thereto by a relatively narrow strip (18), wherein the peripheral part (17) is clamped between the first (3) and the second flange (4) and a peripheral zone of the central part (16) can support on the first flange (3), **characterized in that** in the situation in which peripheral zone of the central part (16) supports on the first flange (3) the central part (16) of the sheet (14) closes the valve (10), and **in that** the flanges (3, 4) extend obliquely relative to the flow direction of a .liquid flowing through the housing (1, 2).

2. Non-r.eturn valve (10) as claimed in claim 1, **characterized in that** the central part (16) is provided with a weighting element (20).

3. Non -return valve (10) as claimed in either of the claims 1-2, **characterized in that** it is provided with a handgrip (7).

4. Non-return valve (10) as claimed in any of the claims 1-3, **characterized in that** it is provided with a foot (8).

5. Non-return valve (10) as claimed in any of the claims 1-4, **characterized in that** it is stackable.

6. Non-return valve (10) as claimed in any of the claims 1-5, **characterized in that** at least the inlet part (1) or outlet part (2) is provided with a rapid-action coupling (5, 6) and a pair of clamps (11) with at least one operating member (12) for coupling this inlet part (1) or this outlet part (2) to the conduit part corresponding thereto, wherein the at least one operating member (12) extends at least partially along the housing.

7. Non-return valve (10) as claimed in any of the claims 1-5, **characterized in that** at least an inlet part (1) or outlet part (2) is provided with a flange for coupling this inlet part (1) or this outlet part (2) to the conduit part corresponding thereto.

8. Non-return valve (10) as claimed in claim 4, **characterized in that** in the bottom of the foot (8) a slot (13) is formed for receiving a handgrip (7) of a following non-return valve (10) provided with such handgrip (7).

## Patentansprüche

1. Einwegventil (10) für eine Flüssigkeitsleitung, ein Absperrelement (14) und ein Gehäuse (1, 2) umfassend, das mit einem Einlassteil (1) und einem Auslassteil (2) ausgestattet ist, die jeweils kuppelbar sind mit einem korrespondierenden Teil der Flüssigkeitsleitung, welches Gehäuse aus zumindest zwei kuppelbaren Teilen (1, 2) zusammengesetzt ist, zwischen welchen das Absperrelement (14) angeordnet ist, welche Teile (1, 2) mittels zwei zusammenarbeitenden Flanschen (3, 4) kuppelbar sind, wovon ein erster Flansch (3) einen kleineren Innendurchmesser aufweist als ein zweiter Flansch (4), welches Absperrelement ein Blatt (14) eines flexiblen Materials umfasst, das zwischen dem ersten (3) und dem zweiten Flansch (4) angeordnet ist, welches Blatt (14) ein Zentralteil (16) und ein daran durch einen relativ schmalen Streifen (18) verbundenen Umfangsteil (17) umfasst, wobei das Umfangsteil (17) zwischen dem ersten (3) und dem zweiten Flansch (4) eingeklemmt ist und eine Umfangszone des Zentralteils (16) auf dem ersten Flansch (3) abstützbar ist, **dadurch gekennzeichnet, dass** in der Lage, in der die Randzone des Zentralteils auf dem ersten Flansch (3) abstützt, das Zentralteil (16) des Blattes (14) das Ventil (10) schließt, und, dass sich die Flanschen (3, 4) schräg bezüglich der Strömungsrichtung einer durch das Gehäuse (1, 2) strömenden Flüssigkeit erstrecken.

2. Einwegventil (10) gemäß Anspruch 1, **dadurch gekennzeichnet, dass** das Zentralteil (16) mit einem Beschwerungselement (20) ausgestattet ist.

3. Einwegventil (10) gemäß einem der Ansprüche 1-2, **dadurch gekennzeichnet, dass** dieses mit einem Handgriff (7) ausgestattet ist.

4. Einwegventil (10) gemäß einem der Ansprüche 1-3, **dadurch gekennzeichnet, dass** dieses mit einem Fuß (8) ausgestattet ist.

5. Einwegventil (10) gemäß einem der Ansprüche 1-4, **dadurch gekennzeichnet, dass** dieses stapelbar ist.

6. Einwegventil (10) gemäß einem der Ansprüche 1-5, **dadurch gekennzeichnet, dass** zumindest das Einlassteil (1) oder Auslassteil (2) mit einer Schnellkupplung (5, 6) und ein Paar Klemmen (11) ausgestattet ist mit zumindest einem Bedienungsorgan (12) zum Kuppeln dieses Einlassteils (1) oder dieses Auslassteils (2) mit dem damit korrespondierenden Leitungsteil, wobei sich das zumindest eine Bedienungsorgan (12) zumindest teilweise entlang des Gehäuses erstreckt.

7. Einwegventil (10) gemäß einem der Ansprüche 1-6, **dadurch gekennzeichnet, dass** zumindest ein Einlassteil (1) oder Auslassteil (2) mit einem Flansch zum Kuppeln dieses Einlassteils (1) oder dieses Auslassteils (2) mit dem damit korrespondierenden Leitungsteil ausgestattet ist.

8. Einwegventil (10) gemäß Anspruch 4, **dadurch gekennzeichnet, dass** in dem Boden des Fußes (8) ein Schlitz (13) zur Aufnahme eines Handgriffes (7) eines nächsten Einwegventils (10) ausgebildet ist, das mit einem solchen Handgriff (7) ausgestattet ist.

## Revendications

1. Clapet de retenue (10) pour une conduite de liquide, comprenant un élément de fermeture (14) et un boîtier (1, 2) présentant une partie d'entrée (1) et une partie de sortie (2) qui peuvent chacune être couplées à une partie correspondante de la conduite de liquide, le boîtier étant assemblé à partir d'au moins deux parties connectables (1, 2) entre lesquelles l'élément de fermeture (14) est reçu, lesdites parties (1, 2) pouvant être couplées au moyens de deux brides coopérantes (3, 4), dont une première bride (3) présente une section transversale interne plus petite que celle d'une deuxième bride (4), ledit élément de fermeture (4) comprenant une feuille (14) constitué d'un matériau flexible reçue entre les première (3) et deuxième (4) brides, ladite feuille (14) comprenant une partie centrale (16) et une partie périphérique (17) connectée à celle-ci par une bande relativement étroite (18), dans lequel la partie périphérique (17) est serrée entre les première (3) et deuxième (4) brides, et une zone périphérique de la partie centrale (16) peut supporter la première bride (3), **caractérisé en ce que**, dans la situation dans laquelle une zone périphérique de la partie centrale (16) supporte la première bride (3), la partie centrale (16) de la feuille (14) ferme le clapet (10), et **en ce que** les brides (3, 4) s'étendent en oblique par rapport à la direction d'écoulement d'un liquide qui s'écoule à travers le boîtier (1, 2).

2. Clapet de retenue (10) selon la revendication 1, **caractérisé en ce que** la partie centrale (16) est pourvue d'un élément d'alourdissement (20).

3. Clapet de retenue (10) selon l'une quelconque des revendications 1 ou 2, **caractérisé en ce qu'**il est pourvu d'une poignée (7).

4. Clapet de retenue (10) selon l'une quelconque des revendications 1 à 3, **caractérisé en ce qu'**il est pourvu d'un pied (8).

5. Clapet de retenue (10) selon l'une quelconque des revendications 1 à 4, **caractérisé en ce qu'**il est superposable.

6. Clapet de retenue (10) selon l'une quelconque des revendications 1 à 5, **caractérisé en ce qu'**au moins une partie d'entrée (1) ou une partie de sortie (2) est pourvue d'un raccord à connexion instantanée (5, 6) et d'une paire de pinces (11) présentant au moins un élément opérationnel (12) pour coupler cette partie d'entrée (1) ou cette partie de sortie (2) à la partie de conduite correspondant à celle-ci, dans lequel ledit au moins un élément opérationnel (12) s'étend au moins partiellement le long du boîtier.

7. Clapet de retenue (10) selon l'une quelconque des revendications 1 à 5, **caractérisé en ce qu'**au moins une partie d'entrée (1) ou une partie de sortie (2) est pourvue d'une bride pour coupler cette partie d'entrée (1) ou cette partie de sortie (2) à la partie de conduite correspondant à celle-ci.

8. Clapet de retenue (10) selon la revendication 4, **caractérisé en ce qu'**une fente (13) est formée dans le fond du pied (8) pour recevoir une poignée (7) d'un clapet de retenue suivant (10) muni d'une telle poignée (7).
